# EUROPÄISCHE PATENTSCHRIFT

(11) **EP 0 991 655 B1**
(45) Veröffentlichungstag und Bekanntmachung des Hinweises auf die Patenterteilung: **11.09.2002**
(21) Anmeldenummer: 98934906.3
(22) Anmeldetag: 02.06.1998
(51) Int. Cl.: C07F 1/00, C07F 1/02, C07F 1/04, C07F 1/06

(54) **VERFAHREN ZUR HERSTELLUNG VON ORGANOALKALIMETALLVERBINDUNGEN**
METHOD FOR PRODUCING ORGANOALKALI-METAL COMPOUNDS
PROCEDE POUR LA PREPARATION DE COMPOSES ORGANOMETALLIQUES ALCALINS

(30) Priorität: 14.06.1997 DE 19725192
(43) Veröffentlichungstag der Anmeldung: 12.04.2000
(73) Patentinhaber: Chemetall GmbH, 60487 Frankfurt (DE)
(72) Erfinder: WIETELMANN, Ulrich, D-61381 Friedrichsdorf (DE); RITTMEYER, Peter, D-65843 Sulzbach (DE); LISCHKA, Uwe, D-60437 Frankfurt am Main (DE)
(74) Vertreter: Uppena, Franz, Dr.
(86) Internationale Anmeldenummer: EP9803267
(87) Internationale Veröffentlichungsnummer: WO98057974

(56) Entgegenhaltungen:
- WO-A-95/23803
- GB-A- 1 227 425
- GB-A- 2 083 041
- CHEMICAL ABSTRACTS, vol. 121, no. 15, 10. Oktober 1994 Columbus, Ohio, US; abstract no. 179669, LIU, ERBAO ET AL: "Preparation of alkali metal derivatives of indene and fluorene" XP002056774 & HUAXUE SHIJI (1994), 16(1), 3-4 CODEN: HUSHDR;ISSN: 0258-3283, 1994,
- CHEMICAL ABSTRACTS, vol. 117, no. 7, 17. August 1992 Columbus, Ohio, US; abstract no. 69899, ZHAO, FEIMING ET AL: "An improved method for the preparation of cyclopentadienyl sodium" XP002056775 & DAXUE HUAXUE (1991), 6(6), 36-7, 30 CODEN: DAHUEW;ISSN: 1000-8438, 1991,

## Beschreibung

Die Erfindung betrifft ein Verfahren zur Herstellung von Organoalkalimetallverbindungen durch Umsetzung von metallischem Lithium, Natrium oder Kalium oder von Legierungen dieser Alkalimetalle mit einer organischen Verbindung, die mindestens eine acide CH-Bindung aufweist, in einem Lösungsmittel.

Bei organischen Synthesen bestehen für Organoalkalimetallverbindungen vielfältige Anwendungsmöglichkeiten. Einige Organoalkalimetallverbindungen werden daher im technischen Maßstab hergestellt und sind in größeren Mengen kommerziell erhältlich. Üblicherweise werden Organoalkalimetallverbindungen durch Umsetzung organischer Halogenide mit einem Alkalimetall in einem Lösungsmittel nach der Gleichung
R-X+2M →R-M+MX (M = Li, Na, K; R = Alkyl- oder Arylrest; X = Cl, Br, J)
dargestellt.

Ferner ist bekannt, daß der acide Wasserstoff in organischen Verbindungen durch Umsetzung mit starken metallorganischen Basen (z. B. Butyllithium), mit Alkalimetallamiden (z. B. Lithiumoder Natriumamid) oder mit Alkalimetallhydriden (z. B. Natriumhydrid) durch Alkalimetalle ersetzt werden kann.

Im Fall hinreichend acider CH-Bindungen kann die Metallierung auch direkt durch Alkalimetalle in elementarer Form erfolgen. So wird 9-Fluorenyllithium durch Umsetzung von Fluoren mit metallischem Lithium in Tetrahydrofuran dargestellt (siehe Houben-Weyl, Methoden der Organischen Chemie, Band 13/1, Metallorganische Verbindungen, Seiten 97 bis 98, G. Thieme Verlag, Stuttgart, 1970). Bei der Metallierung CH-acider Verbindungen mit Alkalimetallen kommt es aber in der Regel dann zur Bildung unerwünschter Nebenprodukte, wenn in der zu metallierenden organischen Verbindung Mehrfachbindungen vorhanden sind. Diese werden in einem bestimmten, von der CH-aciden Verbindung, dem Lösungsmittel und der Temperatur abhängigen Ausmaß hydriert. So wurde beispielsweise beobachtet, daß bei der Lithiierung von Fluoren als Nebenprodukte teilhydrierte Fluorene (z. B. Tetrahydrofluoren) entstehen (siehe Eisch und Kaska, J. Org. Chem. 27, 1962, Seiten 3745 bis 3752). Ferner ist bekannt, daß die Metallierungsreaktion häufig nur sehr langsam verläuft. Aus diesem Grund werden in der Regel hohe Alkalimetallüberschüsse eingesetzt, was unter anderem wegen der relativ hohen Metallpreise nachteilig ist. Die realisierbaren Ausbeuten bei der Direktmetallierung sind aus den vorgenannten Gründen daher nur als mäßig zu bezeichnen. So beträgt die Ausbeute bei der Herstellung von 9- Fluorenyllithium selbst bei Einsatz eines ca. 6-fachen Lithiumüberschusses nur 71 % (siehe Houben-Weyl, obiges Zitat).

Der Erfindung liegt daher die Aufgabe zugrunde, ein Verfahren zur Herstellung von Organoalkalimetallverbindungen zu schaffen, bei dem die Umsetzung der Alkalimetalle Lithium, Natrium oder Kalium oder deren Legierungen mit einer CH-aciden organischen Verbindung so durchgeführt wird, daß die Bildung unerwünschter Nebenprodukte zurückgedrängt, die Reaktionsgeschwindigkeit gesteigert und die Produktausbeute erhöht wird.

Die der Erfindung zugrunde liegende Aufgabe wird dadurch gelöst, daß die eingangs genannte Umsetzung in Gegenwart eines Wasserstoffakzeptors durchgeführt wird, wobei pro Mol des durch Lithium, Natrium oder Kalium substituierbaren, aciden Wasserstoffs 0,5 bis 5 Mol des Wasserstoffakzeptors eingesetzt werden, wobei pro Mol des aciden Wasserstoffs 1 bis 3 Mol Lithium, Natrium oder Kalium eingesetzt werden und wobei die acide CH-Bindung einen pkₐ -Wert von 10 bis 30 hat.

Von den genannten Alkalimetallen werden Lithium und Natrium bei der Durchführung des erfindungsgemäßen Verfahrens bevorzugt, denn diese beiden Metalle sind sowohl in größeren Mengen als auch relativ preiswert erhältlich. Außerdem sind die mit Lithium und Natrium metallierten Verbindungen sowohl thermisch als auch gegenüber den eingesetzten Lösungsmitteln relativ stabil. Als Wasserstoffakzeptoren werden organische Verbindungen verwendet, die den durch die Alkalimetalle substituierten Wasserstoff addieren. Die beim erfindungsgemäßen Verfahren anwesenden Alkalimetalle wirken nicht als Wasserstoffakzeptoren. Es wurde gefunden, daß durch das erfindungsgemäße Verfahren solche CH-aciden Verbindungen metalliert werden können, deren Aciditätskonstanten pkₐ im Bereich zwischen 10 und 30 liegen. Die in der Literatur zu findenden numerischen Werte der Aciditätskonstante schwanken in relativ hohem Maße, da sie von der Bestimmungsmethode und speziell von dem gewählten Lösungsmittel und der Temperatur abhängig sind (siehe Houben-Weyl, Methoden der Organischen Chemie, Band III/I, 1970, Seiten 31 bis 69). Für die hier relevanten Verbindungsklassen scheiden Aciditätskonstanten per se aus, die in wäßrigen Lösungen ermittelt wurden, da die nach dem erfindungsgemäßen Verfahren hergestellten Organoalkalimetallverbindungen durch Wasser zersetzt werden. Vielmehr sind nur die Werte der Aciditätskonstanten für die Durchführung des erfindungsgemäßen Verfahrens relevant, die bei Untersuchungen in organischen, aprotischen Lösungsmitteln ermittelt wurden, wobei es zulässig ist, die pkₐ-Werte für ein bestimmtes Lösungsmittel abzuschätzen, wenn pkₐ-Werte für die Lösungsmittel mit analogen Eigenschaften bekannt sind. In der zitierten Veröffentlichung von Houben-Weyl finden sich mehrere Tabellen, in denen die Aciditätskonstanten pkₐ für verschiedene Lösungsmittel angegeben werden, so daß - auch unter Benutzung der Primärliteratur - hinreichend genaue Informationen bezüglich der Aciditätskonstanten pkₐ der einzelnen CH-aciden Verbindungen vorliegen.

Das erfindungsgemäße Verfahren hat den Vorteil, daß die Organoalkalimetallverbindungen in hoher Ausbeute hergestellt werden können und daß die Bildung von Nebenprodukten stark eingeschränkt ist, was auf das synergistische Zusammenwirken der verwendeten CH-aciden Verbindungen mit bestimmter Acidität und der verwendeten Wasserstoffakzeptoren zurückgeführt wird. Insbesonders wird beim erfindungsgemäßen Verfahren die unerwünschte Hydrierung der im Molekül der CH-aciden Verbindungen vorhandenen Mehrfachbindungen sehr stark zurückgedrängt, und die Geschwindigkeit der Metallierungsreaktion wird in vorteilhafter Weise gesteigert.

Das erfindungsgemäße Verfahren hat ferner den Vorteil, daß es die Verwendung elementarer Alkalimetalle gestattet, was gegenüber der Verwendung der bekannten und gebräuchlichen Metallierungsmittel, wie Butyllithium, Lithium- oder Natriumhydrid und Lithium- oder Natriumamid wesentlich preiswerter ist. Ferner entstehen beim erfindungsgemäßen Verfahren in vorteilhafter Weise keine gasförmigen Nebenprodukte (z. B. Wasserstoff), d. h., daß die Arbeitssicherheit erhöht ist und Emissionen vermindert werden.

Nach der Erfindung ist vorgesehen, daß als CH-acide organische Verbindung Cyclopentadien, Inden oder Fluoren verwendet wird. Ferner ist nach der Erfindung vorgesehen, daß Cyclopentadien, Inden und Fluoren mit einem oder mehreren Alkylresten und/oder monocyclischen Arylresten substituiert sind, wobei jedes Kohlenstoffatom des Cyclopentadiens, Indens und Fluorens maximal nur einen Substituenten aufweist. Weiterhin ist nach der Erfindung vorgesehen, daß zwei Moleküle des Cyclopentadiens und/oder Indens und/oder Fluorens oder dieser mit Alkylresten und/oder monocyclischen Arylresten substituierten Verbindungen über eine Alkyl-, Alkenyl- oder Silylgruppe miteinander verknüpft sind. Schließlich ist nach der Erfindung vorgesehen, daß die Alkylsubstituenten und die monocyclischen Arylsubstituenten jeweils mindestens eine funktionelle Gruppe aufweisen, wobei folgende funktionelle Gruppen verwendet werden:
a) Di- oder Trialkylmetallfunktionen; R₂M = oder R₃M- ; M = Si, Ge, Sn; R = Alkylrest
b) Fluorhaltige Funktionen; F-, -C₆F₅, -CF₃
c) Carbonsäurederivatfunktionen; -COOR, -CN, -CONR₂; R = H, Alkylrest und/oder monocyclischer Arylrest
d) Aminfunktionen; -NR₂; R = H, Alkylrest und/oder monocyclischer Arylrest
e) Alkoxyfunktionen; RO-; R = Alkylrest oder monocyclischer Arylrest
f) Nitrofunktion; -NO₂.

Die zur Durchführung des erfindungsgemäßen Verfahrens verwendeten CH-aciden Verbindungen Cyclopentadien, Inden und Fluoren haben folgende Strukturformeln:

Bei diesen Verbindungen haben die Wasserstoffatome der CH₂-Gruppe aciden Charakter und sind daher der Metallierung zugänglich. Die Substitutionsprodukte dieser Verbindungen, die ebenfalls zur Durchführung des erfindungsgemäßen Verfahrens verwendet werden können, enthalten einen oder mehrere Alkyl- und/oder monocyclische Arylsubstituenten. Diese Reste ersetzen die in den Ringen der Verbindungen enthaltenen Wasserstoffatome und/oder das zweite Wasserstoffatom der CH₂-Gruppe.

Beispielsweise ist im 9- Phenylfluoren das zweite Wasserstoffatom der CH₂-Gruppe durch den Phenylrest ersetzt. Jedes Kohlenstoffatom des Cyclopentadiens, des Indens und des Fluorens weist maximal nur einen der vorgenannten Substituenten auf. Der erfindungsgemäßen Metallierung sind auch solche CH-aciden Verbindungen zugänglich, die aus zwei Molekülen des Cyclopentadiens und/oder Indens und/oder Fluorens bestehen, wobei beide Moleküle mit Alkylresten und/oder monocyclischen Arylresten substituiert sein können und wobei die beiden Moleküle über eine Alkyl-, Alkenyl, oder Silylgruppe miteinander verknüpft sind. Erfindungsgemäß können also sowohl symmetrische als auch unsymmetrische CH-acide Verbindungen verwendet werden, d. h., daß diese Verbindungen neben der Brückengruppe entweder zwei gleiche oder zwei verschiedene Moleküle enthalten, wobei die Moleküle aus Cyclopentadien, Inden und/oder Fluoren bestehen. Die Alkylsubstituenten oder die monocyclischen Arylsubstituenten des Cyclopentadiens, Indens und Fluorens können ihrerseits unterschiedliche funktionelle Gruppen aufweisen, wobei einige dieser funktionellen Gruppen zur Verknüpfung von zwei aciden CH-Verbindungen geeignet sind, wie z. B. die funktionelle Gruppe R₂M=.

Es wurde gefunden, daß die vorgenannten Verbindungen nach dem erfindungsgemäßen Verfahren nahezu ausschließlich (>90 %) an der aciden CH₂- bzw. CHR-Gruppe des Ringgerüstes metalliert werden und ansonsten weitgehend unverändert bleiben. Im Gegensatz dazu bilden sich beim Weglassen eines Wasserstoffakzeptors Hydrierungsprodukte, die zum Teil ebenfalls in metallierter Form vorliegen. Bei den unerwünschten Hydrierungsprodukten handelt es sich z. B. um Cyclopenten oder um Di- und Tetrahydrofluoren beziehungsweise um die entsprechenden, substituierten Hydrierungsprodukte.

Alternativ ist nach der Erfindung vorgesehen, daß als CH-acide Verbindung ein monosubstituiertes Alkin, R-C≡C-H, verwendet wird, wobei R ein Alkylsubstituent oder ein monocyclischer Arylsubstituent ist. In diesem Fall ist nach der Erfindung vorgesehen, daß die Alkylsubstituenten und monocyclischen Arylsubstituenten des Alkins jeweils mindestens eine funktionelle Gruppe aufweisen, wobei folgende funktionelle Gruppen verwendet werden:
a) Fluorhaltige Funktionen; F-, -C₆F₅, -CF₃
b) Carbonsäurederivatfunktionen; -COOR, -CN, -CONR₂; R = H, Alkylrest und/oder monocyclischer Arylrest
c) Aminfunktionen; -NR₂; R = H, Alkylrest und/oder monocyclischer Arylrest
d) Alkoxyfunktionen; RO-; R = Alkylrest oder monocyclischer Arylrest
e) Nitrofunktion; -NO₂.

Es wurde gefunden, daß beim erfindungsgemäßen Verfahren die metallierten Produkte R-C≡C-M (M = Alkalimetall) in fast reiner Form anfallen, wo hingegen bei der Umsetzung der Alkine mit Alkalimetallen in Abwesenheit eines Wasserstoffakzeptors auch die Hydrierungsprodukte, also die korrespondierenden Olefine RHC=CH₂ in zum Teil ebenfalls metallierter Form erhalten werden.

Schließlich ist als weitere Alternative nach der Erfindung vorgesehen, daß als CH-acide organische Verbindung eine Verbindung mit der Struktur 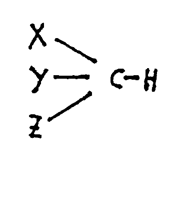 verwendet wird, wobei mindestens eine Gruppe X, Y, Z eine Carbonsäure-, Ester-, Carbonsäureamid-, Nitril-, Isonitril-, Carbonyl-, Nitro-, Trifluormethyl- oder Pentafluorphenylgruppe ist und wobei die anderen Gruppen X, Y, Z unabhängig voneinander Wasserstoff, Alkylreste und/oder monocyclische Arylreste sind. Für diese Alternative ist nach der Erfindung vorgesehen, daß die aus Alkylresten oder monocyclischen Arylresten bestehenden Gruppen X, Y, Z ihrerseits mindestens eine funktionelle Gruppe aufweisen, wobei folgende funktionelle Gruppen verwendet werden:
a) Fluorhaltige Funktionen; -F, -C₆F₅, -CF₃
b) Carbonsäurederivatfunktionen; -COOR, -CN, -CONR₂; R = H, Alkylrest und/oder monocyclischer Arylrest
c) Aminfunktionen; -NR₂; R = H, Alkylrest und/oder monocyclischer Arylrest
d) Alkoxyfunktionen; RO-; R = Alkylrest oder monocyclischer Arylrest
e) Nitrofunktion; -NO₂.

Die CH-aciden Verbindungen des Typs XYZCH können als Abkömmlinge des Methans angesehen werden, wobei mindestens eine Gruppe X, Y, Z ein Heteroatom anthält, das mit dem Molekül auch über eine Mehrfachbindung verknüpft sein kann und wobei die anderen Gruppen X, Y, Z Wasserstoff, Alkylreste und/oder monocyclische Arylreste sind. Die Alkylreste und monocyclische Arylreste können ihrerseits veschiedene funktionelle Gruppen aufweisen. Die zur Durchführung des erfindungsgemäßen Verfahrens geeigneten Abkömmlinge des Methans werden in der Regel mit Ausbeuten >90 % metalliert, ohne daß die im Molekül enthaltenen Mehrfachbindungen in nennenswertem Ausmaß hydriert werden. Ein typischer Vertreter des Verbindungstyps XYZCH ist das Acetonitril CH₃CN.

Allen in den CH-aciden Verbindungen enthaltenen Carbonsäure-, Ester-, Carbonsäureamid-, Nitril-, Isonitril-, Carbonyl-, Nitro-, Trifluormethyl-, Pentafluorphenyl-, Fluor- und Alkoxygruppen ist gemeinsam, daß sie die Acidität der CH-aciden Verbindungen mehr oder weniger stark erhöhen, da sie eine elektrophile, elektronenziehende Wirkung haben. Alle monocyclischen Arylreste bestehen aus einer Phenylgruppe oder einer mit einem oder mehreren Alkylresten substituierten Phenylgruppe.

Nach der Erfindung ist weiter vorgesehen, daß als Wasserstoffakzeptor ein Kohlenwasserstoff verwendet wird, der mindestens eine CC-Doppelbindung aufweist, die entweder mit einer weiteren CC-Doppelbindung oder mit einem nomocyclischen Arylrest in Konjugation steht. Alternativ ist entsprechend der Erfindung vorgesehen, daß als Wasserstoffakzeptor orthokondensierte, polycyclische Aromaten verwendet werden. Nach der Erfindung hat es sich als besonders vorteilhafat erwiesen, wenn als Wasserstoffakzeptor 1,3- Butadien, Isopren, konjugierte Polyene, 1,3- Cyclohexadien, Styrol, Naphthalin, Anthracen, Phenanthren oder Mischungen dieser Verbindungen verwendet werden.

Als Wasserstoffakzeptoren werden Isopren, Styrol und Naphthalin besonders bevorzugt, da diese Verbindungen sowohl preiswert als auch leicht handhabbar sind. Die Hydrierungsprodukte dieser Wasserstoffakzeptoren können aus dem Reaktionsgemisch abgetrennt werden oder im Reaktionsgemisch als Lösungsmittel verbleiben. Bei Verwendung der besonders bevorzugten Wasserstoffakzeptoren kann nahe der theoretischen Stöchiometrie (0,5 Mol Wasserstoffakzeptor pro Mol CH-acide Verbindung) gearbeitet werden, ohne daß es zu negativen Auswirkungen auf die Ausbeute kommt. Es ist aber auch möglich, den Wasserstoffakzeptor in höherem Überschuß zu verwenden, wobei er nach Beendigung der Metallierungsreaktion entweder abgetrennt wird oder im Lösungsmittel verbleibt. Wird die Metallierungsreaktion in Gegenwart von Styrol durchgeführt, so entsteht durch Addition des Wasserstoffs Ethylbenzol, das sich sehr gut als Lösungsmittel eignet. Die Hydrierung des Wasserstoffakzeptors verläuft schnell und exotherm, wodurch es auch zu einer Erhöhung der Reaktionsgeschwindigkeit der Metallierungsreaktion kommt. Die erfindungsgemäß zu verwendenden Wasserstoffakzeptoren addieren den Wasserstoff mit einer höheren Geschwindigkeit als die in den CH-aciden Verbindungen enthaltenen CC-Mehrfachbindungen und/oder die von den Heteroatomen ausgehenden Mehrfachbindungen. Diese Tatsache ist für den Fachmann überraschend, weil die in den CH-aciden Verbindungen enthaltenen CC-Mehrfachbindungen und die von den Heteroatomen ausgehenden Mehrfachbindungen ähnlich hohe und zum Teil sogar höhere Hydrierungswärmen haben als die erfindungsgemäß zu verwendenden Wasserstoffakzeptoren. Die als Wasserstoffakzeptoren verwendeten orthokondensierten polycyclischen Aromaten bestehen aus mindestens zwei 6-Ringen, wobei die Ringe kantenverknüpft vorliegen. So ist im Phenanthren der dritte 6-Ring mit den beiden anderen 6-Ringen jeweils über eine gemeinsame CC-Bindung kantenverknüpft.

Nach der Erfindung hat es sich als besonders vorteilhaft erwiesen, wenn das metallische Lithium, Natrium und Kalium und die Legierungen dieser Metalle in Form von Granulaten oder Pulvern mit einem mittleren Korndurchmesser d₅₀ <0,1 mm eingesetzt werden. In dieser Form sind die Alkalimetalle besonders reaktiv, da die Metallierungsreaktion in der Fest/Flüssig-Grenzschicht des Alkalimetalls abläuft und die große Oberfläche der feinteiligen Granulate und Pulver die Metallierungsreaktion begünstigt. Es kommt hinzu, daß bei der erfindungsgemäßen Metallierungsreaktion in der Regel keine unlöslichen Nebenprodukte entstehen, welche die Oberfläche der Alkalimetalle blockieren könnten. Dies ist ein Vorteil gegenüber der bekannten Synthese von Organoalkalimetallverbindungen aus organischen Halogeniden, bei der die gebildeten Alkalihalogenide die Metalloberfläche zumindest teilweise blockieren.

Nach der Erfindung ist weiter vorgesehen, daß als Lösungsmittel Ether oder monocyclische aromatische Kohlenwasserstoffe verwendet werden, wobei in vorteilhafter Weise pro Mol der CH-aciden organischen Verbindung mindestens zwei Mol Ether zugegen sind. Nach der Erfindung ist es besonders vorteilhaft, wenn die ehterischen Lösungen mit gesättigten Kohlenwasserstoffen und/oder mit monocyclischen aromatischen Kohlenwasserstoffen verdünnt sind. Besonders vorteilhaft ist es, wenn als Ether Diethylether, 1,2-Dimethoxyethan, Methyl-tert.-Butylether, Diisopropylether oder Tetrahydrofuran, als gesättigte Kohlenwasserstoffe Pentan, Hexan, Cyclohexan und/oder Heptan und als monocyclische aromatische Kohlenwasserstoffe Toluol, Xylol und/oder Ethylbenzol verwendet werden. In der Regel kann ein Lösungsmittel verwendet werden, das aus 10 bis 80 Gew.-% eines Ethers und 90 bis 20 Gew.-% mindestens eines gesättigten Kohlenwasserstoffs mit 5 bis 10 C-Atomen und/oder mindestens eines monocyclischen aromatischen Kohlenwasserstoffs besteht.

Schließlich ist nach der Erfindung vorgesehen, daß die Reaktionstemperatur im Bereich von -20 bis 150°C, vorzugsweise im Bereich von 10 bis 70°C, liegt. Die hohen Reaktionstemperaturen werden nur dann verwendet, wenn die Organoalkalimetallverbindungen thermisch sehr stabil sind und wenn aus dem Reaktionsgemisch höher siedende Komponenten abzutrennen sind. Bei den vorgenannten Reaktionstemperaturen kann das erfindungsgemäße Verfahren auch in technischem Maßstab sicher beherrscht werden.

Die entsprechend dem erfindungsgemäßen Verfahren hergestellten Organoalkalimetallverbindungen können in Form ihrer Lösungen entweder in den Handel gebracht oder direkt nach der Herstellung zur Durchführung einer organischen Synthese verwendet werden. Die Produktlösungen können beispielsweise in der Metallocen-Chemie oder zur Herstellung von Pharmazwischenprodukten verwendet werden. Fluorenyllithium kann beispielsweise durch Umsetzung mit Formaldehyd zur Synthese von 9- Fluorenylmethanol verwendet werden.

Die nachfolgende Tabelle enthält Werte der Aciditätskonstanten pkₐ für einige CH-acide organische Verbindungen, die entsprechend dem erfindungsgemäßen Verfahren metalliert werden können. In der Tabelle werden auch die Lösungsmittel beziehungsweise die Methoden angegeben, in beziehungsweise nach denen die pkₐ-Werte bestimmt worden sind.

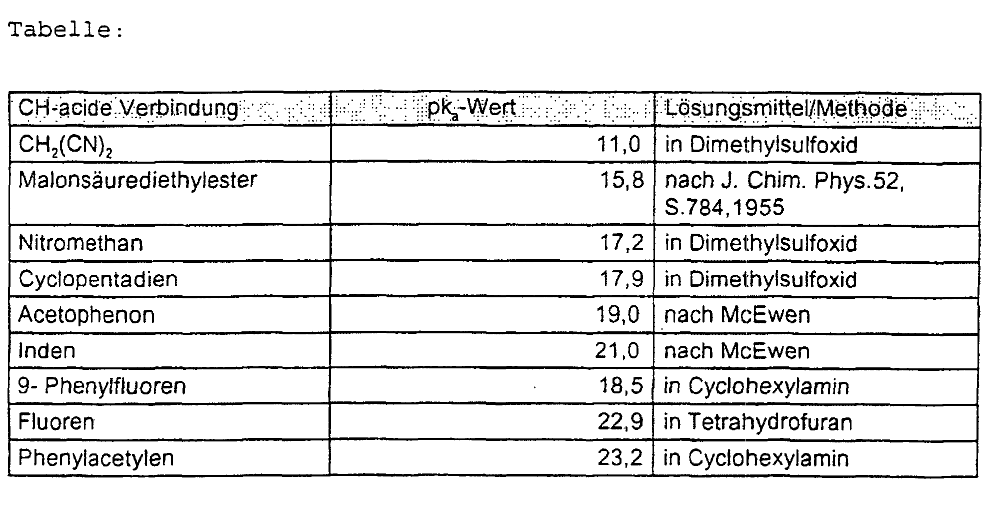

Der Gegenstand der Erfindung wird nachfolgend anhand mehrerer Ausführungs- und Vergleichsbeispiele näher erläutert.

### Beispiel 1:

In einem kühlbaren Doppelmantelreaktor wurden 2,95 g (426 mmol) Lithium-Granulat in 305 g Tetrahydrofuran vorgelegt. Innerhalb von 75 Minuten wurde eine Mischung aus 200 g Tetrahydrofuran, 22,1 g (212 mmol) Styrol und 66,47 g (400 mmol) Fluoren zudosiert. Hierbei wurde die Reaktionstemperatur durch Kühlung auf 40°C gehalten; die Umsetzung verlief exotherm. Anschließend wurde eine Stunde bei 30°C gerührt, und danach wurde die dunkelrote Lösung filtriert. Der Filterrückstand wurde mit wenig Tetrahydrofuran gewaschen, und die Waschflüssigkeit wurde mit dem Filtrat vereinigt. Die Ausbeute an Fluorenyllithium betrug 94,5 %, bezogen auf das eingesetzte Fluoren.

### Vergleichsbeispiel A:

Dieses Vergleichsbeispiel wurde entsprechend dem Beispiel 1 ausgeführt, wobei jedoch kein Styrol zugesetzt wurde. Während der Reaktion bildete sich Wasserstoff; allerdings wurden nur 15 % der theoretisch zu erwartenden Waserstoffmenge erhalten. Die Ausbeute betrug 87,5 %, bezogen auf das eingesetzte Fluoren. Nach der Hydrolyse der Produktlösung mit Wasser wurden durch gaschromatographische und massenspektroskopische Verfahren vier Nebenprodukte gefunden, bei denen es sich um teilweise hydrierte Fluorene handelte, in denen eine oder zwei Doppelbindungen hydriert waren. Die Nebenprodukte lagen in einer Menge von 20 %, bezogen auf das eingesetzte Fluoren, vor. Der Widerspruch zwischen der ermittelten Ausbeute von 87,5 % und dem Gehalt an Nebenprodukten von 20 % ist dadurch zu erklären, daß auch die Nebenprodukte zu einem gewissen Teil lithiiert und damit bei der Bestimmung der Ausbeute erfaßt werden. Tatsächlich betrug die Ausbeute an Fluorenyllithium also nicht 87,5 %, sondern lediglich ca. 80 %. Das nach Beispiel 1 in Gegenwart von Styrol hergestellte Produkt enthielt dagegen nur sehr geringe Mengen der Nebenprodukte, die durch teilweise Hydrierung des Fluorens entstehen.

### Beispiel 2:

In einem kühlbaren Doppelmantelreaktor wurden 2,59 g (373 mmol) Lithium-Granulat in 72 g Tetrahydrofuran und 40 g Toluol vorgelegt. Innerhalb von 75 Minuten wurde eine Mischung aus 54,9 g (330 mmol) Fluoren, 200 g Toluol und 18 g (173 mmol) Styrol zudosiert. Die Reaktionstemperatur wurde durch Kühlung auf 30 bis 35°C gehalten; die Umsetzung verlief exotherm. Anschließend wurde eine Stunde gerührt, und danach wurde die dunkelrote Lösung filtriert. Der Filtrationsrückstand wurde mit wenig Tetrahydrofuran gewaschen, und die Waschflüssigkeit wurde mit dem Filtrat vereinigt. Die Ausbeute an Fluorenyllithium betrug 85 %, bezogen auf das eingesetzte Fluoren.

### Vergleichsbeispiel B:

Dieses Vergleichsbeispiel wurde entsprechend Beispiel 2 durchgeführt, wobei allerding ohne Styrol gearbeitet wurde. Bei der Umsetzung wurde keine Waserstoffentwicklung beobachtet, und die Gesamtausbeute an organischen Lithiumverbindungen betrug 67,5 %. Von dieser Gesamtausbeute entfällt nur ein Teil auf das Fluorenyllithium, da der Reaktionsverlauf bei diesem Vergleichsbeispiel dem Reaktionsverlauf des Vergleichsbeipiels A entspricht.

### Beispiel 3:

In einem kühlbaaren Doppelmantelreaktor wurden 2,2 g (317 mmol) Lithium-Pulver in 175 g Tetrahydrofuran vorgelegt. Innerhalb von 60 Minuten wurden aus zwei Tropftrichtern 19,9 g (301 mmol) monomeres Cyclopentadien in 20 g Tetrahydrofuran und 15,6 g (150 mmol) Styrol in 16 g Tetrahydrofuran simultan zudosiert. Die Umsetzung verlief exotherm. Die Reaktionstemperatur wurde durch Kühlung auf 35°C gehalten. Anschließend wurde eine Stunde bei 35°C gerührt, und die hellrote Lösung wurde danach filtriert. Die Ausbeute an Cyclopentadienyllithium betrug 91,8 %, bezogen auf das eingesetzte Cyclopentadien.

### Vergleichsbeispiel C:

Dieses Vergleichsbeispiel wurde analog Beispiel 3 durchgeführt, wobei allerdings kein Styrol zugegen war. Bei dieser Umsetzung bildete sich Wasserstoff in einer Menge von 52 %, bezogen auf die theoretisch zu erwartende Waserstoffausbeute. Die Gesamtausbeute der hergestellten organischen Lithiumverbindungen betrug 82,6 %, bezogen auf das eingesetzte Cyclopentadien. Im Produkt wurde aber durch gaschromatographische und massenspektroskopische Verfahren das Hydrierungsprodukt Cyclopenten identifiziert, das ebenfalls zu einem bestimmten Teil der Lithiierung zugänglich ist, so daß die Ausbeute an Cyclopentadienyllithium tatsächlich niedriger liegt als 82,6 %.

### Beispiel 4:

4,95 g (215 mmol) stückiges Natrium mit einer Kantenlänge von 5 bis 15 mm wurden in 150 g Tetrahydrofuran vorgelegt. Innerhalb von 45 Minuten wurde eine Mischung aus 33,4 g (201 mmol) Fluoren, 10,44 g (100,2 mmol) Styrol und 100 g Tetrahydrofuran zudosiert. Die Reaktionstemperatur wurde durch Kühlung auf 40°C gehalten. Die Umsetzung verlief exotherm. Die rot gefärbte Lösung wurde nach 7-stündigem Rühren bei Raumtemperatur vom nichtumgesetzten Natrium abfiltriert. Die Ausbeute an Fluorenylnatrium betrug 65,7 %.

### Vergleichsbeispiel D:

Es wurde analog Beispiel 4 gearbeitet, jedoch ohne Zugabe von Styrol. Die Metallierungsreaktion verlief sehr langsam. Die Ausbeute an Fluorenylnatrium betrug lediglich 8 %, wobei davon auszugehen ist, daß in der Reaktionslösung Hydrierungsprodukte des Fluorens enthalten sind, da während der Umsetzung keine Wasserstoffentwicklung beobachtet wurde.

### Beispiel 5:

1,054 g (152 mmol) Lithium-Pulver wurden in 85 g Tetrahydrofuran suspendiert. Zu dieser Suspension wurde innerhalb von 50 Minuten eine Mischung aus 12 g Tetrahydrofuran, 6,48 g (62,2 mmol) Styrol und 10,16 g (123 mmol) tert.-Butylacetylen hinzugefügt. Die Reaktionstemperatur der exothermen Umsetzung wurde durch Kühlung auf 30°C gehalten. Während der Umsetzung wurde keine Gasentwicklung beobachtet. Nach einstündigem Rühren bei Raumtemperatur wurde die leicht gelb gefärbte Lösung filtriert. Die Ausbeute an Lithium-tert.-Butylacetylid betrug 95,1 %, bezogen auf das eingesetzte Butylacetylen. Nach Hydrolyse des Reaktionsproduktes wurde durch eine gaschromatographische Analyse festgestellt, daß durch eine Nebenreaktion tert.-Butylethylen gebildet worden war und zwar in einer Menge von ca. 5 %, bezogen auf das Hauptprodukt Lithium-tert.-Butylacetylid.

### Vergleichsbeispiel E:

Es wurde entsprechend Beispiel 5 gearbeitet, jedoch ohne Styrol. Während der Reaktion entstand Wasserstoff, wobei allerdings nur 10 % der theoretisch zu erwartenden Wasserstoffmenge erhalten wurde. Die Ausbeute betrug 72,1 %. Nach der Hydrolyse des Endprodukts wurde durch eine gaschromatographische Analyse festgestellt, daß durch eine Hydrierungsnebenreaktion tert.-Butylethylen in erheblichem Umfang entstanden war und zwar betrug das Verhältnis zwischen dem Hauptprodukt Lithium-tert.-Butylacetylid und dem Nebenprodukt tert.-Butylethylen 100:39.

### Beispiel 6:

2,44 g (352 mmol) Lithium-Pulver wurden in 220 g Tetrahydrofuran suspendiert. Anschließend wurde ein Gemisch aus 12,45 g (303 mmol) Acetonitril und 15,62 g (150 mmol) Styrol innerhalb von 30 Minuten zugegeben. Die Reaktionstemperatur wurde durch Kühlung auf 25°C gehalten. Anschließend wurde noch 90 Minuten bei Raumtemperatur gerührt. Danach wurde das nicht umgesetzte Lithium abfiltriert. Während der Metallierungsreaktion wurde Wasserstoffentwicklung beobachtet, allerdings wurden nur 40 % der theoretisch zu erwartenden Wasserstoffmenge isoliert. Die Ausbeute an LiCH₂CN betrug 95 %, bezogen auf das eingesetzte Acetonitril. Bei einer gaschromatographischen Analyse konnten keine Hydrierungsprodukte des Acetonitrils gefunden werden; es wurden lediglich Acetonitril, Ethylbenzol und Styrol identifiziert.

Die Ausführungs- und Vergleichsbeispiele zeigen, daß mit dem erfindungsgemäßen Verfahren CH-acide organische Verbindungen mit hoher Ausbeute in die entsprechenden Organoalkalimetallverbindungen überführt werden können, wobei insbesondere die Bildung von Nebenprodukten erheblich zurückgedrängt wird. Die aus dem Wasserstoffakzeptor Styrol resultierenden Reaktionsprodukte behindern die Einsatzmöglichkeiten der Verfahrensprodukte nicht, während die aus den CH-aciden Verbindungen gebildeten Nebenprodukte durchaus nachteilige Wirkungen bei der Weiterverarbeitung des Verfahrensprodukts entfalten, denn die metallierten Nebenprodukte reagieren bei der Weiterverarbeitung des Verfahrensprodukts zu unerwünschten Endprodukten ab. Die Vermeidung von Nebenprodukten der Metallierung ist also als beachtlicher Vorteil der Erfindung zu bewerten.

## Patentansprüche

1. Verfahren zur Herstellung von Organoalkalimetallverbindungen durch Umsetzung von metallischem Lithium, Natrium oder Kalium oder von Legierungen dieser Alkalimetalle mit einer organischen Verbindung, die mindestens eine acide CH-Bindung aufweist, in einem Lösungsmittel, **dadurch gekennzeichnet, daß** die Umsetzung in Gegenwart eines Wasserstoffakzeptors durchgeführt wird, wobei pro Mol des durch Lithium, Natrium oder Kalium substituierbaren, aciden Wasserstoffs 0,5 bis 5 Mol des Wasserstoffakzeptors eingesetzt werden, wobei pro Mol des aciden Wasserstoffs 1 bis 3 Mol Lithium, Natrium oder Kalium eingesetzt werden und wobei die acide CH-Bindung einen pkₐ-Wert von 10 bis 30 hat.

2. Verfahren nach Anspruch 1, **dadurch gekennzeichnet, daß** als CH-acide organische Verbindung Cyclopentadien, Inden oder Fluoren verwendet wird.

3. Verfahren nach Anspruch 2, **dadurch gekennzeichnet, daß** Cyclopentadien, Inden und Fluoren mit einem oder mehreren Alkylresten und/oder monocyclischen Arylresten substituiert sind, wobei jedes Kohlenstoffatom des Cyclypentadiens, Indens und Fluorens maximal nur einen Substituenten aufweist.

4. Verfahren nach den Ansprüchen 2 und 3, **dadurch gekennzeichnet, daß** zwei Moleküle des Cyclopentadiens und/oder des Indens und/oder des Fluorens oder dieser mit Alkylresten und/oder monocyclischen Arylresten substituierten Verbindungen über eine Alkyl-, Alkenyl- oder Silylgruppe miteinander verknüpft sind.

5. Verfahren nach den Ansprüchen 3 und 4, **dadurch gekennzeichnet, daß** die Alkylsubstituenten und die monocyclischen Arylsubstituenten jeweils mindestens eine funktionelle Gruppe aufweisen, wobei folgende funktionelle Gruppen verwendet werden:
a) Di- oder Trialkylmetallfunktionen; R₂M = oder R₃M-; M = Si, Ge, Sn; R = Alkylrest
b) Fluorhaltige Funktionen; F-, -C₆F₅, -CF₃
c) Carbonsäurederivatfunktionen; -COOR, -CN, -CONR₂; R = H, Alkylrest und/oder monocyclischer Arylrest
d) Aminfunktionen; -NR₂; R = H, Alkylrest und/oder monocyclischer Arylrest
e) Alkoxyfunktionen; RO-; R = Alkylrest oder monocyclischer Arylrest
f) Nitrofunktion; -NO₂

6. Verfahren nach Anspruch 1, **dadurch gekennzeichnet, daß** als CH-acide Verbindung ein monosubstituiertes Alkin, R-C≡C-H, verwendet wird, wobei R ein Alkylsubstituent oder ein monocyclischer Arylsubstituent ist.

7. Verfahren nach Anspruch 6, **dadurch gekennzeichnet, daß** die Alkylsubstituenten und monocyclischen Arylsubstituenten des Alkins jeweils mindestens eine funktionelle Gruppe aufweisen, wobei folgende funktionelle Gruppen verwendet werden:
a) Fluorhaltige Funktionen; F-, -C₆F₅, -CF₃
b) Carbonsäurederivatfunktionen; -COOR, -CN, -CONR₂; R = H, Alkylrest und /oder monocyclischer Arylrest
c) Aminfunktionen; -NR₂; R = H, Alkylrest und/oder monocyclischer Arylrest
d) Alkoxyfunktionen; RO-; R = Alkylrest oder monocyclischer Arylrest
e) Nitrofunktion; -NO₂

8. Verfahren nach Anspruch 1, **dadurch gekennzeichnet, daß** als CH-acide organische Verbindung eine Verbindung mit der Struktur 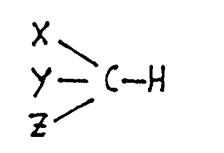 verwendet wird, wobei mindestens eine Gruppe X, Y, Z eine Carbonsäure-, Ester-, Carbonsäureamid-, Nitril-, Isonitril-, Carbonyl-, Nitro-, Trifluormethyl- oder Pentafluorphenylgruppe ist und wobei die anderen Gruppen X, Y, Z Wasserstoff, Alkylreste und/oder monocyclische Arylreste sind.

9. Verfahren nach Anspruch 8, **dadurch gekennzeichnet, daß** die aus Alkylresten oder monocyclischen Arylresten bestehenden Gruppen X, Y, Z ihrerseits mindestens eine funktionelle Gruppe aufweisen, wobei folgende funktionelle Gruppen verwendet werden:
a) Fluorhaltige Funktionen; -F, -C₆F₅, -CF₂
b) Carbonsäurederivatfunktionen; -COOR, -CN, -CONR₂; R = H, Alkylrest und/oder monocyclischer Arylrest
c) Aminfunktionen; -NR₂; R = H, Alkylrest und/oder monocyclischer Arylrest
d) Alkoxyfunktionen; RO-; R = Alkylrest oder monocyclischer Arylrest
e) Nitrofunktion; -NO₂.

10. Verfahren nach den Ansprüchen 1 bis 9, **dadurch gekennzeichnet, daß** als Wasserstoffakzeptor ein Kohlenwasserstoff verwendet wird, der mindestens eine CC-Doppelbindung aufweist, die entweder mit einer weiteren CC-Doppelbindung oder mit einem monocyclischen Arylrest in Konjugation steht.

11. Verfahren nach den Ansprüchen 1 bis 9, **dadurch gekennzeichnet, daß** als Wasserstoffakzeptor orthokondensierte, polycyclische Aromaten verwendet werden.

12. Verfahren nach den Ansprüchen 10 und 11, **dadurch gekennzeichnet, daß** als Wasserstoffakzeptor 1,3- Butadien, Isopren, konjugierte Polyene, 1,3- Cyclohexadien, Styrol, Naphthalin, Anthracen, Phenanthren oder Mischungen dieser Verbindungen verwendet werden.

13. Verfahren nach den Ansprüchen 1 bis 12, **dadurch gekennzeichnet, daß** das metallische Lithium, Natrium und Kalium und die Legierungen dieser Metalle in Form von Granulaten oder Pulvern mit einem mittleren Korndurchmesser d₅₀ <0,1 mm eingesetzt werden.

14. Verfahren nach den Ansprüchen 1 bis 13, **dadurch gekennzeichnet, daß** als Lösungsmittel Ether oder monocyclische aromatische Kohlenwasserstoffe verwendet werden.

15. Verfahren nach Anspruch 14, **dadurch gekennzeichnet, daß** pro Mol der CH-aciden organischen Verbindung mindestens zwei Mol Ether zugegen sind.

16. Verfahren nach den Ansprüchen 14 und 15, **dadurch gekennzeichnet, daß** die etherischen Lösungen mit gesättigten Kohlenwasserstoffen und/oder mit monocyclischen aromatischen Kohlenwasserstoffen verdünnt sind.

17. Verfahren nach den Ansprüchen 14 bis 16, **dadurch gekennzeichnet, daß** als Ether Diethylether, 1,2-Dimethoxyethan, Methyl-tert.-Butylether, Diisopropylether oder Tetrahydrofuran, als gesättigte Kohlenwasserstoffe Pentan, Hexan, Cyclohexan und/oder Heptan und als monocyclische aromatische Kohlenwasserstoffe Toluol, Xylol und/oder Ethylbenzol verwendet werden.

18. Verfahren nach den Ansprüchen 1 bis 17, **dadurch gekennzeichnet, daß** die Reaktionstemperatur im Bereich von -20 bis 150°C liegt.

19. Verfahren nach Anspruch 18, **dadurch gekennzeichnet, daß** die Reaktionstemperatur im Bereich von 10 bis 70°C liegt.

## Claims

1. Process for the preparation of organo-alkali metal compounds by reaction of metallic lithium, sodium or potassium or of alloys of these alkali metals with an organic compound which has at least one acidic CH bond in a solvent, **characterized in that** the reaction is carried out in the presence of a hydrogen acceptor, wherein 0.5 to 5 mol of the hydrogen acceptor are employed per mol of the acidic hydrogen which can be replaced by lithium, sodium or potassium, wherein 1 to 3 mol of lithium, sodium or potassium are employed per mol of the acidic hydrogen, and wherein the acidic CH bond has a pkₐ value of 10 to 30.

2. Process according to claim 1, **characterized in that** cyclopentadiene, indene or fluorene is used as the CH-acid organic compound.

3. Process according to claim 2, **characterized in that** cyclopentadiene, indene and fluorene are substituted by one or more alkyl radicals and/or monocyclic aryl radicals, each carbon atom of the cyclopentadiene, indene and fluorene having a maximum of only one substituent.

4. Process according to claims 2 and 3, **characterized in that** two molecules of cyclopentadiene and/or indene and/or fluorene or of these compounds substituted by alkyl radicals and/or monocyclic aryl radicals are linked to one another via an alkyl, alkenyl or silyl group.

5. Process according to claims 3 and 4, **characterized in that** the alkyl substituents and the monocyclic aryl substituents in each case contain at least one functional group, the following functional groups being used:
a) di- or trialkylmetal functions; R₂M = or R₃M- ; M = Si, Ge, Sn; R = alkyl radical
b) fluorine-containing functions; F-, C₆F₅, -CF₃
c) carboxylic acid derivative functions; -COOR, -CN, -CONR₂; R = H, alkyl radical and/or monocyclic aryl radical
d) amine functions; -NR₂; R = H, alkyl radical and/or monocyclic aryl radical
e) alkoxy functions; RO-; R = alkyl radical or monocyclic aryl radical
f) nitro function; -NO₂.

6. Process according to claim 1, **characterized in that** the CH-acid compound used is a monosubstituted alkyne R-C≡C-H, wherein R is an alkyl substituent or a monocyclic aryl substituent.

7. Process according to claim 6, **characterized in that** the alkyl substituents and monocyclic aryl substituents of the alkyne in each case contain at least one functional group, the following functional groups being used:
a) fluorine-containing functions; F-, C₆F₅, -CF₃
b) carboxylic acid derivative functions; -COOR, -CN, -CONR₂; R = H, alkyl radical and/or monocyclic aryl radical
c) amine functions; -NR₂; R = H, alkyl radical and/or monocyclic aryl radical
d) alkoxy functions; RO-; R = alkyl radical or monocyclic aryl radical
e) nitro function; -NO₂.

8. Process according to claim 1, **characterized in that** the CH-acid organic compound used is a compound having the structure 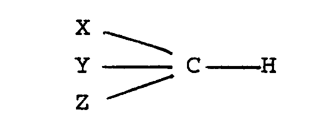 wherein at least one group X, Y, Z is a carboxylic acid, ester, carboxylic acid amide, nitrile, isonitrile, carbonyl, nitro, trifluoromethyl or pentafluorophenyl group, and wherein the other groups X, Y, Z are hydrogen, alkyl radicals and/or monocyclic aryl radicals.

9. Process according to claim 8, **characterized in that** the groups X, Y, Z consisting of alkyl radicals or monocyclic aryl radicals in turn contain at least one functional group, the following functional groups being used:
a) fluorine-containing functions; F-, C₆F₅, -CF₃
b) carboxylic acid derivative functions; -COOR, -CN, -CONR₂; R = H, alkyl radical and/or monocyclic aryl radical
c) amine functions; -NR₂; R = H, alkyl radical and/or monocyclic aryl radical
d) alkoxy functions; RO-; R = alkyl radical or monocyclic aryl radical
e) nitro function; -NO₂.

10. Process according to claims 1 to 9, **characterized in that** the hydrogen acceptor used is a hydrocarbon which has at least one CC double bond which is in conjugation either with another CC double bond or with a monocyclic aryl radical.

11. Process according to claims 1 to 9, **characterized in that** ortho-condensed, polycyclic aromatics are used as the hydrogen acceptor.

12. Process according to claims 10 and 11, **characterized in that** 1,3-butadiene, isoprene, conjugated polyenes, 1,3-cyclohexadiene, styrene, naphthalene, anthracene, phenanthrene or mixtures of these compounds are used as the hydrogen acceptor.

13. Process according to claims 1 to 12, **characterized in that** the metallic lithium, sodium and potassium and the alloys of these metals are employed in the form of granules or powders with an average particle diameter d₅₀ of <0.1 mm.

14. Process according to claims 1 to 13, **characterized in that** ethers or monocyclic aromatic hydrocarbons are used as the solvent.

15. Process according to claim 14, **characterized in that** at least two mol of ether are present per mol of the CH-acid organic compound.

16. Process according to claims 14 and 15, **characterized in that** the ethereal solutions are diluted with saturated hydrocarbons and/or with monocyclic aromatic hydrocarbons.

17. Process according to claims 14 to 16, **characterized in that** diethyl ether, 1,2-dimethoxyethane, methyl tert-butyl ether, diisopropyl ether or tetrahydrofuran are used as ethers, pentane, hexane, cyclohexane and/or heptane are used as saturated hydrocarbons, and toluene, xylene and/or ethylbenzene are used as monocyclic aromatic hydrocarbons.

18. Process according to claims 1 to 17, **characterized in that** the reaction temperature is in the range from -20 to 150°C.

19. Process according to claim 18, **characterized in that** the reaction temperature is in the range from 10 to 70°C.

## Revendications

1. Procédé de préparation de composés organiques de métal alcalin par réaction de lithium, de sodium ou de potassium à l'état métallique ou d'alliages de ces métaux alcalins, avec un composé organique comportant au moins une liaison C-H acide, dans un solvant, **caractérisé par le fait que** la réaction se fait en présence d'un accepteur d'hydrogène, la quantité d'accepteur d'hydrogène utilisée étant comprise entre 0,5 et 5 moles par mole d'hydrogène acide susceptible d'être remplacé par un atome de lithium, de sodium ou de potassium, la quantité de lithium, de sodium ou de potassium utilisée étant comprise entre 1 et 3 moles par mole d'hydrogène acide et la liaison C-H acide ayant un pKₐ compris entre 10 et 30.

2. Procédé selon la revendication 1, **caractérisé par le fait que** l'on utilise en tant que composé organique à groupe C-H acide un cyclopentadiène, un indène ou un fluorène.

3. Procédé selon la revendication 2, **caractérisé par le fait que** le cyclopentadiène, l'indène ou le fluorène portent un ou plusieurs substituants alkyle et/ou aryle monocyclique, chaque atome de carbone de ces cyclopentadiène, indène et fluorène comportant au plus un seul substituant.

4. Procédé selon les revendications 2 et 3, **caractérisé par le fait que** deux molécules de cyclopentadiène et/ou d'indène et/ou de fluorène ou de ces composés portant des substituants alkyle et/ou aryle monocyclique, sont liées par un groupe alkylène, alcénylène ou silylène.

5. Procédé selon les revendications 3 et 4, **caractérisé par le fait que** les substituants alkyle et les substituants aryle monocyclique comportent chacun au moins un groupe fonctionnel, les groupes fonctionnels suivants étant utilisés :
a) les fonctions di- ou trialkylmétal, =MR₂ ou -MR₃, où M représente un atome de Si, Ge ou Sn, et R représente un résidu alkyle,
b) les fonctions fluorées : -F, -C₆F₅, -CF₃,
c) les fonctions dérivées d'acides carboxyliques : -COOR, -CN, -CONR₂, où R représente un atome d'hydrogène ou un résidu alkyle et/ou aryle monocyclique,
d) les fonctions amine : -NR₂, où R représente un atome d'hydrogène ou un résidu alkyle et/ou aryle monocyclique,
e) les fonctions alcoxy : -OR, où R représente un résidu alkyle ou aryle monocyclique,
f) la fonction nitro : -NO₂,

6. Procédé selon la revendication 1, **caractérisé par le fait que** l'on utilise en tant que composé à groupe C-H acide un alcyne monosubstitué, R-C≡CH, où R représente un substituant alkyle ou un substituant aryle monocyclique.

7. Procédé selon la revendication 6, **caractérisé par le fait que** les substituants alkyle et les substituants aryle monocyclique de l'alcyne comportent chacun au moins un groupe fonctionnel, les groupes fonctionnels suivants étant utilisés :
a) les fonctions fluorées : -F, -C₆F₅, -CF₃,
b) les fonctions dérivées d'acides carboxyliques : -COOR, -CN, -CONR₂, où R représente un atome d'hydrogène ou un résidu alkyle et/ou aryle monocyclique,
c) les fonctions amine : -NR₂, où R représente un atome d'hydrogène ou un résidu alkyle et/ou aryle monocyclique,
d) les fonctions alcoxy : -OR, où R représente un résidu alkyle ou aryle monocyclique,
e) la fonction nitro : -NO₂,

8. Procédé selon la revendication 1, **caractérisé par le fait que** l'on utilise, comme composé à groupe C-H acide, un composé de formule 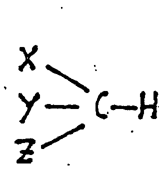 où au moins un des symboles X, Y et Z représente un groupe acide carboxylique, ester, carbamide, nitrile, isonitrile, carbonyle, nitro, trifluorométhyle ou pentafluorophényle, et où les autres symboles X, Y et Z représentent chacun un atome d'hydrogène, un résidu alkyle et/ou aryle monocyclique.

9. Procédé selon la revendication 8, **caractérisé par le fait que** les symboles X, Y et Z représentant un résidu alkyle ou aryle monocyclique, portent à leur tour au moins un groupe fonctionnel, les groupes fonctionnels suivants étant envisagés :
a) les fonctions fluorées : -F, -C₆F₅, -CF₃,
b) les fonctions dérivées d'acides carboxyliques : -COOR, -CN, -CONR₂, où R représente un atome d'hydrogène ou un résidu alkyle et/ou aryle monocyclique,
c) les fonctions amine : -NR₂, où R représente un atome d'hydrogène ou un résidu alkyle et/ou aryle monocyclique,
d) les fonctions alcoxy : -OR, où R représente un résidu alkyle ou aryle monocyclique,
e) la fonction nitro : -NO₂,

10. Procédé selon la revendication 1 à 9, **caractérisé par le fait que** l'on utilise en tant qu'accepteur d'hydrogène un hydrocarbure comportant au moins une double liaison carbone-carbone, conjuguée soit avec au moins une autre double liaison carbone-carbone, soit avec un résidu aryle monocyclique.

11. Procédé selon les revendications 1 à 9, **caractérisé par le fait que** l'on utilise, en tant qu'accepteur d'hydrogène, des composés aromatiques polycycliques condensés en ortho.

12. Procédé selon les revendications 10 et 11, **caractérisé par le fait que** l'on utilise, comme accepteur d'hydrogène, du 1,3-butadiène, de l'isoprène, des polyènes conjugués, du 1,3-cyclohexadiène, du styrène, du naphtalène, de l'anthracène, du phénanthrène ou des mélanges de ces composés.

13. Procédé selon les revendications 1 à 12, **caractérisé par le fait que** l'on utilise du lithium, du sodium et du potassium à l'état métallique ou des alliages de ces métaux sous forme de granulés ou de poudres ayant un diamètre moyen de particules (d₅₀) inférieur à 0,1 mm.

14. Procédé selon les revendications 1 à 13, **caractérisé par le fait que** l'on utilise en tant que solvant un éther ou un hydrocarbure aromatique monocyclique.

15. Procédé selon la revendication 14, **caractérisé par le fait que** l'on utilise au moins deux moles d'éther par mole de composé organique à groupe C-H acide.

16. Procédé selon les revendications 14 et 15, **caractérisé par le fait que** les solutions dans l'éther sont diluées avec des hydrocarbures saturés et/ou avec des hydrocarbures aromatiques monocycliques.

17. Procédé selon les revendications 14 à 16, **caractérisé par le fait que** l'on utilise, en tant qu'éther, du diéthyléther, du 1,2-diméthoxyéthane, du methyl-tert-butyléther, du diisopropyléther ou du tétrahydrofurane, en tant qu'hydrocarbures saturés du pentane, de l'hexane, du cyclohexane et/ou de l'heptane, et en tant qu'hydrocarbure aromatique monocyclique, du toluène, du xylène et/ou de l'éthylbenzène.

18. Procédé selon les revendications 1 à 17, **caractérisé par le fait que** la température réactionnelle est comprise entre -20 et 150 °C.

19. Procédé selon la revendication 18, **caractérisé par le fait que** la température réactionnelle est comprise entre 10 et 70 °C.
